# FASCICULE DE BREVET EUROPEEN

(11) **EP 0 513 733 B1**
(45) Date de publication et mention de la délivrance du brevet: **07.02.1996**
(21) Numéro de dépôt: 92107978.6
(22) Date de dépôt: 12.05.1992
(51) Int. Cl.: H02G 7/22, H02G 7/05

(54) **Dispositif d'ancrage de câble de garde**
Erdseilverankerungseinrichtung
Guard-cable anchoring device

(30) Priorité: 16.05.1991 FR 9105948
(43) Date de publication de la demande: 19.11.1992
(73) Titulaire: ALCATEL CABLE, F-92111 Clichy Cédex (FR)
(72) Inventeur: Bonicel, Jean-Pierre, F-69005 Lyon (FR); Tatat, Oliver, F-69740 Genas (FR)
(74) Mandataire: Weinmiller, Jürgen

(56) Documents cités:
- FR-A- 2 199 620

## Description

La présente invention est relative au câble de garde des lignes aériennes de transport haute ou très haute tension. Elle porte plus particulièrement sur un dispositif d'ancrage de câble de garde, pour sa fixation à au moins certains des pylônes de la ligne d'énergie concernée.

Le document FR-A-2199620 divulgue un dispositif permettant d'ancrer l'extrémité d'un câble à une charpente, ce câble étant à âme porteuse en acier et à l'enveloppe en aluminium ou alliage d'aluminium. Ce dispositif comporte un premier manchon en acier, qui est prévu fendu et est monté sur l'extrémité dénudée de l'âme en l'enserrant, et un deuxième manchon en aluminium ou alliage d'aluminium, qui est en partie monté sur l'enveloppe du câble et sur le premier manchon et reçoit par ailleurs intérieurement un organe de liaison bloqué dans une chape. Le deuxième manchon est comprimé sur toute sa longueur sur l'enveloppe du câble, le premier manchon et l'organe de liaison.

De manière connue, le câble de garde d'une ligne de transport d'énergie est destiné à assurer la protection de la ligne, notamment vis à vis de la foudre, en écoulant les courants de court-circuit à la terre via les pylônes auxquels ils sont fixés ou suspendus et raccordés électriquement. Il est également utilisé actuellement pour des télécommunications et comporte à cet effet un circuit de télécommunication central, constitué par un câble coaxial, ou des paires téléphoniques, ou des fibres optiques, ou encore des paires téléphoniques et des fibres optiques. Ce circuit de télécommunication est entouré d'une ou de deux couches de fils d'armure en acier galvanisé câblés, constituant en conséquence une ou deux couronnes superposées formant voûte de résistance, et d'une armure extérieure en alliage d'aluminium et en particulier en almélec, constituant la couronne périphérique extérieure du câble.

Ce câble de garde est le câble supérieur de la ligne de transport d'énergie à laquelle il est associé. Lorsqu'un épissurage est à réaliser entre deux tronçons de câble de garde, il doit être ancré au pylône proche du point d'épissurage. Cet épissurage est réalisé au sol au cours de la pose du câble. En conséquence le point ou zone d'ancrage sur le tronçon de câble de garde en cours de pose, destiné à permettre sa fixation au pylône concerné, tient au minimum compte de la hauteur du pylône et n'est pas à l'extrémité de ce tronçon de câble de garde.

L'ancrage de ce tronçon de câble de garde ou plus globalement du câble de garde se fait de manière connue dans une chape en U dont les extrémités des branches repliées sont fermées, par boulonnage, et sont fixées, par exemple par boulonnage également ou par un tendeur, au pylône. Il est réalisé en enfilant la partie terminale du câble de garde à travers la base de la chape, percée à cet effet, et en montant sur ce câble de garde un dispositif d'ancrage.

Le dispositif d'ancrage de câble de garde est de manière connue un manchon métallique comprimé à la presse à sertir sur la zone d'ancrage de ce câble. Le manchon assure le blocage du câble de garde dans la chape, contre la base de celle-ci par des moyens annexes convenables.

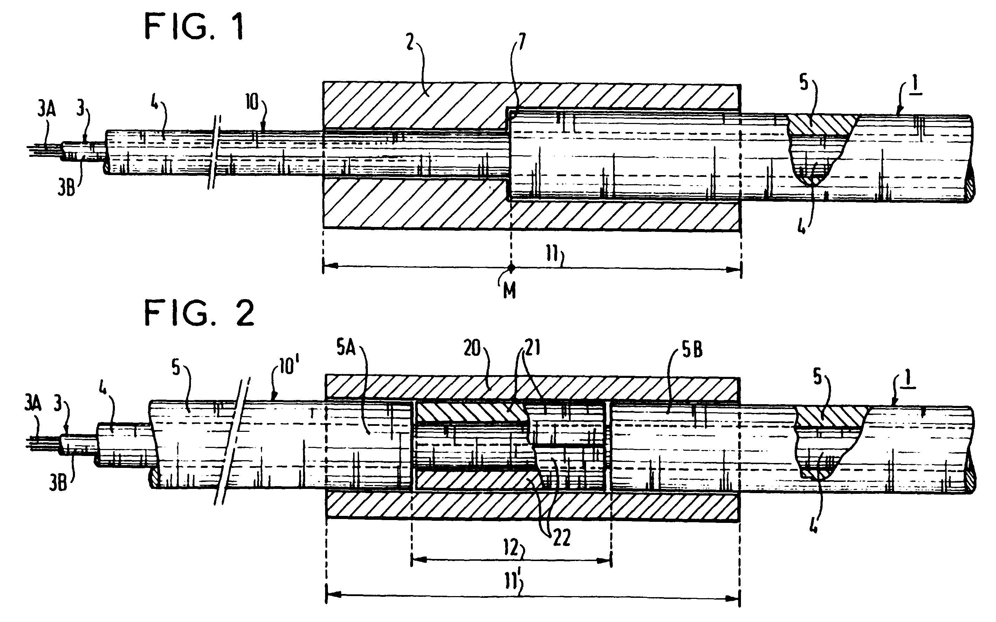

La figure 1 du dessin ci-annexé montre un câble de garde 1 équipé d'un tel dispositif d'ancrage connu, constitué par le manchon précité désigné sous la référence 2. Ce câble de garde 1 est à circuit de télécommunication centrale 3, par exemple à fibres optiques 3A sous tube 3B. Il comporte une armure interne d'acier 4, en une seule couche de fils câblés ou pouvant être en deux couches superposées, sur le tube 3A, et une armure externe d'almélec 5 recouvrant l'armure d'acier. La partie terminale de ce câble est celle à gauche du manchon 2 dans cette figure 1, elle est désignée sous la référence 10. La zone d'ancrage de ce câble est celle sur laquelle est fixé le manchon 2, cette zone est repérée en 11.

Cette technique donne des résultats tout à fait satisfaisants sur le plan mécanique. Elle impose cependant, comme il ressort de cette figure 1, que le manchon 2 ait un épaulement intérieur 7, pour qu'il soit serti sur l'armure en acier 4 d'une part et sur l'armure d'almélec 5 d'autre part. Cet épaulement interne 7 impose quant à lui d'éliminer l'armure externe d'almélec 5 sur toute la partie terminale 10 du câble de garde, jusqu'au milieu M de la zone d'ancrage 11, sensiblement, pour pouvoir glisser en place le manchon le long de cette partie terminale depuis son extrémité.

Avec une distance de 100 m et plus entre cette zone d'ancrage et l'extrémité du câble de garde, l'élimination de l'armure d'almélec sur une telle longueur est une opération fastidieuse et longue.

La présente invention a pour but d'éviter l'élimination de l'armure externe sur une telle longueur importante.

Elle a donc pour objet un dispositif d'ancrage de câble de garde à armure interne en acier et armure externe en alliage d'aluminium, comportant un premier manchon métallique fixé sur ladite armure interne dénudée et un deuxième manchon métallique monté et serti sur ladite armure externe et ledit premier manchon en place sur l'armure interne, pour la fixation dudit câble de garde à un pylône de ligne aérienne de transport d'énergie réalisée dans des moyens eux-mêmes fixés audit pylône, caractérisé en ce que pour ledit câble de garde comportant en outre un circuit de télécommunication axial entouré par lesdites armures, ledit deuxième manchon entoure une zone d'ancrage non terminale dudit câble et en ce que ledit premier manchon est constitué de deux demi-coquilles fixées sur l'armure interne dénudée uniquement sur une partie de ladite zone d'ancrage non terminale, ledit deuxième manchon étant glissé sur ladite armure externe depuis l'extrémité du câble jusqu'à la zone d'ancrage non terminale et étant serti sur lesdites coquilles en place sur ladite armure interne dénudée et sur les deux exrémités de part et d'autre de l'armure externe.

Ce dispositif d'ancrage présente en outre au moins l'une des caractéristiques supplémentaires suivantes :
- les deux demi-coquilles sont sensiblement de même diamètres intérieur et extérieur que ladite armure externe,
- les deux demi-coquilles sont en alliage d'aluminium,
- les deux demi-coquilles sont fixées sur ladite armure interne par sertissage avec ledit deuxième manchon sur ladite zone d'ancrage.

La présente invention est décrite en détail ci-après en regard d'un mode préféré de réalisation illustré dans le dessin ci-annexé. Dans ce dessin :
- la figure 1 montre le dispositif d'ancrage de l'art connu indiqué ci-avant monté sur un câble de garde,
- la figure 2 montre un dispositif d'ancrage selon l'invention monté sur un tel câble.

Dans cette figure 2, le câble de garde en tant que tel analogue à celui de la figure 1 est désigné sous la même référence précitée 1 et ses parties constitutives sous les mêmes références 3, 4 et 5.

Les références 10' et 11' désignant sa partie terminale et sa zone d'ancrage qui se trouvent modifiées par rapport à la figure 1.

La partie terminale 10' est conservée telle quelle, sans élimination de son armure externe 5. Cette armure externe 5 est éliminée sur la seule portion dite médiane 12 de la zone d'ancrage, de longueur sensiblement moitié de cette zone. Les deux extrémités 5A et 5B de cette armure externe 5, qui sont de part et d'autre de la portion médiane 12 dépouillée de l'armure externe, appartiennent ainsi à la zone d'ancrage 11' du câble de garde 1.

Le dispositif d'ancrage de câble de garde selon l'invention monté sur cette zone 11' comporte un manchon métallique 20, sans épaulement intérieur comme dans la figure 1. Ce manchon 20 est de diamètre intérieur juste supérieure à celui extérieur de l'armure externe d'almélec 5, pour s'enfiler sur elle à l'extrémité de câble de garde et venir coulisser sur elle le long de la partie terminale 10' jusqu'à sa mise en place sur la zone d'ancrage 11'. Le dispositif d'ancrage comporte en outre deux demi-coquilles appliquées sur l'armure interne en acier 4, dans la portion 12, avant la mise en place du manchon sur la zone d'ancrage 11'.

Le manchon 20 recouvre les deux demi-coquilles 21 et 22 et les deux extrémités 5A et 5B adjacentes de l'armure externe 5. Ce manchon et les deux demi-coquilles sont sertis de préférence en une seule opération, à la presse à sertir sur l'armure externe 5 et sur l'armure interne 4.

En variante les deux demi-coquilles sont serties sur l'armure interne 4 dans une première opération, puis le manchon amené en place sur la zone 11' et serti sur les demi-coquilles et sur l'armure externe dans une deuxième opération.

Ces deux demi-coquilles reconstituent sensiblement l'armure externe éliminée dans la portion 12. Elles sont aussi en alliage d'aluminium et en particulier en almélec, comme l'armure externe 5.

## Revendications

1. Dispositif d'ancrage de câble de garde à armure interne (4) en acier et armure externe (5) en alliage d'aluminium comportant un premier manchon métallique (21, 22) fixé sur l'armure interne préalablement dénudée et un deuxième manchon métallique (20) monté et serti sur ladite armure externe et sur ledit premier manchon en place sur ladite armure interne, pour la fixation dudit câble de garde à un pylône de ligne aérienne de transport d'énergie réalisée dans des moyens eux-mêmes fixés audit pylône, caractérisé en ce que, pour ledit câble de garde comportant en outre un circuit de télécommunication axial (3) entouré par lesdites armures, ledit deuxième manchon (20) entoure une zone d'ancrage non terminale (11') dudit câble et en ce que ledit premier manchon (21, 22) est constitué de deux demi-coquilles fixées sur l'armure interne dénudée uniquement sur une partie (12) de ladite zone d'ancrage non terminale (11'), ledit deuxième manchon (20) étant glissé sur ladite armure externe (5) depuis l'extrémité du câble jusqu'à ladite zone d'ancrage non terminale et étant serti sur les deux demi-coquilles (21, 22) en place sur ladite armure interne de cette zone d'ancrage dénudée et sur les deux extrémités de part et d'autre de ladite armure externe.

2. Dispositif selon la revendication 1, caractérisé en ce que les deux demi-coquilles (21, 22) sont sensiblement de même diamètres intérieur et extérieur que ceux de ladite armure externe (5).

3. Dispositif selon l'une des revendications 1 et 2, caractérisé en ce que les deux demi-coquilles (21, 22) sont en alliage d'aluminium.

4. Dispositif selon l'une des revendications 1 à 3, caractérisé en ce que les deux demi-coquilles (21, 22) sont fixées sur ladite armure interne (4) par sertissage avec ledit manchon (20) sur ladite zone d'ancrage (11').

## Patentansprüche

1. Verankerungsvorrichtung für ein Blitzschutzseil mit innerer Stahlarmierung (4) und äußerer Armierung (5) aus einer Aluminiumlegierung, die eine erste metallische Hülse (21, 22), die auf der inneren, vorher freigelegten Armierung befestigt ist, und eine zweite metallische Hülse (20) aufweist, die auf die äußere Armierung und die erste Hülse montiert und aufgepreßt ist, die auf der inneren Armierung angeordnet ist, um das Blitzschutzseil an einem Freileitungsmast für den Energietransport zu befestigen, und zwar in Mitteln, die selbst am Mast befestigt sind, dadurch gekennzeichnet, daß für das Blitzschutzseil, das außerdem einen axialen Fernmeldekreis (3) umgeben von den Armierungen aufweist, die zweite Hülse (20) eine nicht am Ende des Seils liegende Verankerungszone (11') umgibt und daß die erste Hülse (21, 22) aus zwei Halbschalen besteht, die auf der inneren Armierung befestigt sind, die nur auf einem nicht am Ende liegenden Teil (12) der Verankerungszone (11') freigelegt ist, während die zweite Hülse (20) auf die äußere Armierung (5) ausgehend vom Ende des Seils bis zur nicht am Ende liegenden Verankerungszone aufgeschoben wird und auf die beiden Halbschalen (21, 22), die auf der inneren freigelegten Armierung dieser Zone liegen, und auf die beiden anschließenden Enden der äußeren Armierung aufgepreßt ist.

2. Vorrichtung nach Anspruch 1, dadurch gekennzeichnet, daß die beiden Halbschalen im wesentlichen den gleichen Innen- und Außendurchmesser wie die äußere Armierung haben.

3. Vorrichtung nach einem der Ansprüche 1 und 2, dadurch gekennzeichnet, daß die beiden Halbschalen (21, 22) aus einer Aluminiumlegierung bestehen.

4. Vorrichtung nach einem der Ansprüche 1 bis 3, dadurch gekennzeichnet, daß die beiden Halbschalen (21, 22) an der inneren Armierung (4) durch Aufpressen zusammen mit der zweiten Hülse (20) in der Verankerungszone (11) befestigt sind.

## Claims

1. Anchoring device for a guard cable having a steel internal armouring (4) and an aluminium alloy external armouring (5), including a metal first sleeve (21, 22) fixed to the previously bared internal armouring and a metal second sleeve (20) mounted on and crimped to said external armouring and to said first sleeve in place on said internal armouring, for fixing said guard cable to an overhead power transmission-line pylon implemented in means themselves fixed to said pylon, characterised in that, for said guard cable further including an axial telecommunication circuit (3) surrounded by said armourings, said second sleeve (20) surrounds a non-terminal anchoring area (11') of said cable and in that said first sleeve (21, 22) comprises two half-shells fixed to the bared internal armouring in only a part (12) of said non-terminal anchoring area (11'), said second sleeve (20) being threaded over said external armouring (5) from the end of the cable as far as said non-terminal anchoring area and being crimped to the two half-shells (21, 22) in place on said internal armouring in the bared anchoring area and to the two ends on either side of said external armouring.

2. Device according to claim 1 characterised in that the two half-shells (21, 22) have substantially the same inside and outside diameters as said external armouring (5).

3. Device according to claim 1 or claim 2 characterised in that the two half-shells (21, 22) are made from aluminium alloy.

4. Device according to any one of claims 1 to 3 characterised in that the two half-shells (21, 22) are crimped to said internal armouring (4) at the same time as said sleeve (20) is crimped to said anchoring area (11').
